# EUROPEAN PATENT APPLICATION

(11) **EP 2 669 514 A1**
(43) Date of publication of application: **04.12.2013**
(21) Application number: 11857190.0
(22) Date of filing: 30.01.2011
(51) Int. Cl.: F03G 6/06, F24J 2/00, F24J 2/07, F24J 2/10, F24J 2/54, C09K 5/14, C01B 31/30, F28C 3/14, F28D 20/00

(54) **SOLAR HEAT STORAGE AND HIGH TEMPERATURE GAS GENERATING SYSTEM WITH WORKING MEDIUM BEING FLOWING SAND**

(71) Applicant: Chen, Yuqi, Beijing 100190 (CN)
(72) Inventor: Chen, Yuqi, Beijing 100190 (CN)
(74) Representative: Mittler, Enrico
(86) International application number: PCT/CN2011/070822
(87) International publication number: WO 2012/100438

(57) **Abstract**

A solar heat storage and high temperature gas generating system comprises a sun-tracking light concentrating device (1), a heat storage tank (2) and a heat exchange device (3), with the working medium being flowing sand (5). The flowing sand (5) is heated by the sun-tracking light concentrating device (1), and is transported into the heat storage tank (2). The flowing sand (5) is exported from the heat storage tank (2) steadily, thereby transferring heat to the high pressure gas or liquid (6) which is to be heated in the heat exchange device (3) and generating high temperature and pressure gas. The system has the advantages of good heat storage effect, large heat storage volume, high heat exchange efficiency and low operation cost. (Fig. 1)

## Description

### Technical Field

The present invention is related to a system and a method to store solar energy, in addition, the invention deals with a system and a method of storage of solar-generated hot gas. In particular, the invention relates to systems for solar heat storage and high temperature gas generation with flowing sand as medium.

### Prior Art

In order to achieve large-scale application of solar energy, two key issues are solar energy storage and reduce operating costs. Heated medium by solar concentrator can produce high temperature and high pressure gas (such as air or steam), driving turbines turbine power generation or for industrial use.

In the solar photo-thermal systems, the solar energy is stored in a form of thermal energy. It is known as the best way to store solar energy. However, to achieve low cost, long-lasting, mass thermal storage, it is critical to find out storage medium that is cheaper, high-temperature resistant, and easy to realize heat of exchange.

At present, there are a lot of thermal energy storage media. They can generally be divided into two types, i.e., liquids and solids. Liquid are some media such as metal-melting, heat conduction oil, metals such as sodium. One advantage of liquid media is that its liquidity is very good while the problems are that when the volume is large, the container has to endure higher lateral pressure at a high temperature, resulting in a high cost. In addition, molten metal salt has a corrosion problem, and the heat conduction oil and sodium metal are quite expensive. Moreover, for sodium metal, it is not easy to prevent leakage, resulting in security issues. These shortcomings result in that liquid-storage media are too expensive to be used in thermal energy storage systems. Solid thermal storage media, such as rock, soil, concrete, with advantages being low cost, have disadvantage of poor liquidity, which lead to heat exchange difficult.

Flowing sand possesses advantages of both solid storage medium and liquid one. Using advantages of sands such as solidity, liquidity, being able to accumulate, high temperature resistance, corrosion-free, affordable advantages, one may built very inexpensive, a capability large, heat exchange convenient, solar energy-storage and energy-exchange systems.

US Patent No. 4,338,919 is presented by particulate matter (including sand) to receive simple solar devices, including the collection, storage, transport of heat exchangers, and loop, however, has the following problems:
(1) The collector did not consider solar concentrator, so that the energy losses by convection and radiation are large due to large exposed area. Therefore, the highest temperature of the heated particulate matter cannot be too high to be applied directly to the high-temperature solar thermal system and thus cannot be used to effectively power or as an industrial power.
(2) Sand surface is usually light colors, when directly used to absorb sunlight, high reflection rate of sunlight leads to larger energy losses and lower efficiency.
(3) Only a simple cylindrical heat storage tank is given. When its volume is increased, side walls withstand very high pressure in the horizontal direction along the walls. To overcome it, one has to increase the wall thickness. It results in increase of the heat stress, manufacture costs so that one is not able to produce low-cost thermal storage tank. Usually, to a fluid, within a container, the sidewall grazing pressure is proportional to the ratio of the diameter and the thickness of the container. In this way, while the height keeps the same but diameter increases, in order to maintain the vessel's endurance, it is bound to increase the thickness of the container, which makes the cost of per unit area increase. Moreover, when the container's height increases, the bottom of the container withstands more radial pressure to the fluid, making further increases the cost per unit area. Therefore, usually to fluid, when container's volume increases, unit costs per volume increases instead of decreases. That is, usually to the gas or liquid fluids, on the one hand, any container cannot be made big, on the other hand, if making big, the cost becomes more per unit of volume. Storage containers for powder material such as sand, if the inside wall along the cylinder axis is straight, the conclusion is similar.
(4) The proposed heat exchanger transfer heat between the fluidized-bed granular material and fluid in the pipe. Since pipes and air contact directly, heat transfer is inefficiencies. For these reasons, in accordance with US Patent No. 4,338,919 proposed methods and devices high temperature and high pressure gas could not be produced efficiently so as to drive the turbine system.

Using solar energy to produce high temperature media tend to be with Sun tracking concentrator systems. Currently, costs of the trough solar concentrator, the tower solar concentrator, and the dish solar concentrator are very expensive. Trough concentrating system uses single-axis tracking, supporting and driving system for tracking, so the price is low, but the cost is expensive in vacuum glass tubes used; if the Tower type and disc type dual-axis tracking solar concentrator used, the support and track-drive parts are expensive. Based on the principle of solar concentrator, the costs are high, resulting in limiting the widespread use of solar concentrator. Therefore, it needs to build a new solar concentrator, for realization of tracking concentrating solar energy at low cost.

To make the heat of the flowing sand to transfer to gas so as to produce a high temperature and high pressure gas, a heat exchanging device is needed to achieve above object. Up to now, the prior art heat transfer equipment can be used to transfer the heat between gas and gas, between gas and liquid, or between liquid and liquid. They cannot be used to exchange heat between sand and liquid or between sand and gas.

### Summary of the Invention

The object of this invention is to provide kinds of solar heat storage and high temperature gas generation systems with a flowing sand as medium, with advantages of such as better effect of thermal energy storage, larger scale of heat storage, higher efficiency for heat exchange, and lower manufacture and operation costs.

It is accordingly the first aspect of the invention to provide a solar energy storage and the high temperature gas production system, with such features that: the system consists of a sun track concentrated device, a heat storage tank, and a heat exchanging device by taking a flowing sand as medium; the heat exchanging device exchanges heat between the flowing sand and gas or liquid; the sand medium is heated through the sun track concentrated device, and then transfer to the heat storage tank where the heat energy is stored in the tank; then the medium flowing sand is outputted steadily from the heat storage tank. Finally, the high temperature and high pressure gas is produced through the heat exchanger between the hot medium and the work gas.

It is the second aspect of the invention to provide a solar energy storage and the high temperature gas production system, with such features that: the system consists of a sun track concentrated device, a head storage tank, and a heat exchanging device, by taking a flowing sand as medium; the sand medium is heated to 800°C - 1500°C through the sun track concentrated device, and then transfer to the heat storage tank where the heat energy is stored in the tank; then the medium flowing sand is outputted steadily from the heat storage tank. Finally, the high temperature and high pressure gas is produced through the heat exchanger between the hot medium and the work gas. The air at room temperature is compressed by air compressors at level I and level II compression, exchanging heat, achieved the pressure of the air continues rise; then the air is compressed at level III; then is outputted to the heat exchange devices to exchanging heat between the air and the medium sand from the storage tank, where the pressure air is heated to 700°C-1400°C, then this high temperature high pressure air is transferred to turbo-machine for turbine to generate power. The hot air after turbine is send to a heat exchange device to heat the medium sand; afterwards, the medium sand is sent to the heat storage tank with smaller size, then to send back to concentrated sun concentrated device for medium recycling.

It is the third aspect of the invention to provide a solar energy storage and the high temperature steam production system, with such features that: the system includes a sun track concentrated device, a heat storage tank, and a heat exchanging device, a superheater unit by taking flowing sand as medium; the sand medium is heated to 400°C - 650°C through sun track concentrated device, and then transfer to the heat storage tank where the heat energy is stored in the tank; The processed water by the processor is preheated to around 90°C by the sand-water heat exchanger, then the water pass into pressure pump to pressurize to 3-5MPa. By exchanging heat between the water and the sand transferred from the superheater, the saturated steam is generated by the steam generator. Then on the next stage, the supersaturated steam is further heated by the superheater and the flowing sand flowing from the heat storage tank, so that a over supersaturated steam with high temperature of 350-550°C and pressure of 2-10MPa is generated. Then the supersaturated steam is transferred to steam turbine for turbine for generating power. The steam is then sent to the condenser to condensate into water to enter the water recycling.

It is the forth aspect of the invention to provide a heat storage tank. Its characteristics are as follows: sa ide wall from the inside to the outside consists of a refractory layer, an insulation layer and a wall sealing layer. Refractory layer is constructed by a special type brick, whose upward surface inside the tank is water level while downward surface is bevel or kind of curve between the water level and the bevel surfaces, the angle between the bevel and the level surface is less than the angle of repose of sand, makes natural whereabouts flowing sand in heat storage tank stacked into cone-shaped. Only the most prominent line in the downward surface of bricks contacts sands have contacts while the rest part of this surface remains separate from sand.

It is the fifth aspect of the invention to provide method to increase black color on the surface of the flowing sand for receiving sunlight directly by surface modification treatment with carbide. It is characterized by such a fact that: the sand and the carbon rich material is mixed and heated to 600°C or more under the condition of isolating air.

It is the sixth aspect of the invention to provide a heat exchanger, with such features that: adopting a cyclone heat exchanger. The main body of the cyclones heat exchanger is of a ring structure. On the outer edge of the ring there are uniform pores along the ring in which equal pipelines are inserted in 10°-20° uniform inclination angle α. The other ends of the pipelines are inserted into a tube plate, connected to the gas inlet through tube box. High-speed gas flows through the entrance into the ring main body of the cyclone heat exchanger, swirling along the arrow r, flowing out upward in the middle of it. Certain number holes in the upper middle of cyclone heat exchanger are open with axial symmetry, into which flowing sand flows through the pipeline. Within the cyclone heat exchanger, air swirls and flows inward along the radial direction, while the flowing sand swirls and flows outward under the action of centrifugal force. Gas and the flowing sand move inversely along the radial direction, thus achieving counter current heat exchange between gases and flowing sand. Collection mouth is equipped with in the center of the bottom, to collect flowing sand for output.

It is the seventh aspect of the invention to provide a heat exchanger, with such features that: adopting a cyclone heat exchanger, with entrance section consisting of a volute-shaped air intake. Air entering into the cyclone heat exchanger swirls in high-speed, flowing out from outtake located on the upward center. High temperature sands enter into the cyclone heat exchanger from uniform distributed inlet pipes, in which on the one hand it rotates as swirls, on the other hand it flows outward along the radial direction under the action of centrifugal force, flowing out from exit beneath the cyclone. Gas and the flowing sand move inversely along the radial direction, thus achieving counter current heat exchange between gases and flowing sand.

It is the eighth aspect of the invention to provide a heat exchanger, with such features that: adopting swirling tubes as a heat exchanger, which is constituted by swirl tubes. Passing the air guiding-plate, the high-speed gas enters into the swirl tube through the intake, making the helical motion, also moving along axial direction downward and along radial direction inward, then flowing out from outtake. Circular pipelines with trumpet-shaped openings at the lower end are equipped with in the upper central of the swirl tube. The lower end of the trumpet-shaped openings is equipped with the cone, with the circular cone tube slit. The sand flows in the circular cone tube slit from the openings through the pipelines, entering into the main body of swirl tubes. It then moves together with the air. Simultaneously the flowing sands move from inside to outside along the radial direction under the action of centrifugal force and the downward with wind, then flowing out from the ring-like exit. The gas and the flowing sand move inversely along the radial direction, thus achieving counter current heat exchange between the gas and flowing sand.

It is the ninth aspect of the invention to provide a sun tracking concentrating device, characterized in that: the sun -tracking concentrating device consists of sun concentrating mirror, triangular bracket, the slewing bearing with gear, gear reducer controlling the horizontal direction control section, and gear reducer controlling the forward and backward direction and control section; the slewing bearing is equipped with horizontally a in fixed triangular bracket; two coaxial ball bearings are equipped with above the rotating disk of the slewing bearing, rotating with the rotation of the slewing bearing in the horizontal direction; The shaft of slewing bearing and the shaft of ball bearing of the shaft perpendicular with each other and intersect at a fixed point; sun concentrating mirror are symmetrically fixed to the shafts of two ball bearing, the height of the sun concentrating mirror on the two ball bearing are fixed so that the center of gravity of sun concentrating mirror overlaps with the fixed point.

It is the tenth aspect of the invention to provide a heat exchanging device, characterized in that: a settling chamber heat exchanger is used; the lower part of the settling chamber is a cylinder or the other shaped-tube, while the upper part is a cone-shaped structure; the internal of the cylinder is paved with lightweight thermal insulating refractory material, while the external is covered by welded metal or brick; the bottom of the settling chamber is paved with lightweight thermal insulation layers and ground layers; near the bottom of the cylinder, a layer with uniform ventilation holes is constituted by a heat-resistant material, with 3°-15° inclination to partly cylinder-shaped exit; gas gets into from the external entrance to the higher end, made of a high temperature resistant material, to the lower one of the settling chamber; the cone angle of the tapered top cover is greater than the repose angle of sand; a cylinder container is equipped with in the top center of the tapered cover, being the entrance of sand; a grid built by the cross rod and vertical post is equipped with at the bottom of the cone structure; on each lattice point, a funnel vessel is equipped with to connect the top cylinder container by pipelines; these pipelines, on the one hand causes the flowing sand to flow in each funnel-shape vessel from the top cylinder container, on the other hand, together with metal or nonmetallic grid, plays a support role to circular cone structure; the flowing sand flows downward uniformly from each funnel-shape vessel, while the air flows upward uniformly, achieving counter current heat exchange between the air and the flowing sand.

According to the present invention, the high temperature mediums output from the thermal storage tank steadily, transferring heat to high pressure fluid to be heated, generating high temperature and high pressure gas. Medium heat circulation system includes both hot medium sand circulation and hot fluid circulation. Among them, medium sand hot cycle is a closed loop, while medium fluid cycle is either open circuit or closed-circuit. Two loops exchange heat through the heat exchangers. Since the invention can achieve around-the-clock, successively, steadily to generate high temperature and high pressure gas for turbine to generate electricity, operating at a constant temperature, makes the system efficiency and the effective service life are greatly improved. According to the present invention, the flowing sand can themselves be heated by sun tracking concentrating solar energy to very high temperatures (for example, 1500°C), thermal energy storage tank of refractory bricks can withstand very high temperatures (for example, more than 2000°C), therefore, the effect of heat storage is good.

According to the present invention, as described in thermal storage tanks, both diameter and height maybe ≥ 50 m, and volume maybe ≥ 10⁵ m³, energy storage can be achieved up to (1-2) x10¹⁴J, can provide 30 MW or above turbine engines with ≥ 10 days power reserve. That allows for thermal storage tank by concentrating sunlight heated high-temperature medium (flowing sand) intermittently input and continuous and stable output. According to the present invention, when sand is placed in thermal storage tanks, not in direct contact with the body on the side of the container, thus, lateral pressure on the walls of small enough to be negligible and, therefore, can have a larger volume of thermal storage tank and hence a large capacity of heat storage.

According to this invention, air at room temperature is in inhalation, through multi-level pressurized by gas compressing machine, except the last level, the pressurized air is cooled down by the invented cyclone heat exchanger through transferring heat to flowing sand, making throughout pressurized process approximately isothermal process, thus reducing loss of air pressurized process, and hence enhancing system efficiency. The final level of pressurized air is sent into the cyclone heat exchanger for heating by transferring heat from flowing sand outputted from heat storage tank at high temperature, generating high temperature and high pressure gas. High temperature and high pressure gas is sent to the Vortex turbine. After the Turbo hot air by the settlement chamber heat exchanger of the present invention provides heat to the heat transfer to flowing sands. Flowing sands send to another small thermal storage tanks, then to be sent to concentrated solar mirror through the sand transportation system for reheating cycle. Through the sands to cool down the compressed air to reduce output air temperature and absorption of residual heat from vortex exhaust heat to heat the medium flowing sands, making the system efficiency is greatly improved, compared with the simple cycle gas turbine

In usual heat exchangers of gas, different gases to exchange heat are separated by pipelines. Small heat transfer coefficient and heat transfer area results in low efficiency and larger heat exchanger volume. To overcome gas small heat transfer coefficient, low efficiency problem, according to the present invention, air and sand, after mixing, reverse flows, and separation by the rotating centrifugal force or inertia-gravity. Through these processes, achieving direct reverse heat exchange between the air and the flowing sand. In direct heat transfer, area per unit volume and the heat transfer coefficient will increase more than an order of magnitude, making heat transfer efficiency is greatly improved, resulting in more compact and lower cost heat exchanger.

According to the present invention, when the size of thermal storage tank containers increases, the cost does not increase per unit area, which can be made it possible to build very large volume, low-cost storage containers, so running at minimum costs.

According to the present invention, for a cyclone heat exchanger, exchanging heat directly between gas and sand, in a compact form to realize sand mixing with air, heat exchanging, and separation. This will greatly improve the heat transfer area, reducing the heat exchanger size, greatly improving efficiency and reducing costs. Gases and shifting sands are in the same swirling movement but inverse movement along the radial direction. Since the speed of the swirling movement is far greater than the velocity of the radial movement, gas and sand through the inverse radial movement, achieving counter current heat exchange.

According to the invented steam generators with sands (sand-water heat exchanger), water or steam and the flowing sand are separated by the metal pipeline, where water and steam in the pipelines flow upward while the sands being outside of the pipeline flows downward under the gravity. Sand and water flow inversely to realize countercurrent heat exchange, heating the water in the pipelines to produce water saturated steam. In the sand flows through the region, some twisted tape may be inserted to increase the mixing of sand layers so as to increase efficiency.

According to the present invention, using sand to cool the hot water output from condenser, the cooling water from the condenser can be recycled. Using sand for cooling, it can be used to save significant amount of water in maintaining high efficient. This is significant to take steam turbine as power generation in those places with plenty solar energy but lack of water. Otherwise, it is inefficient for taking air cooling.

To simplify the method for solar tracking, lower support and tracking costs of sunglasses, the invention also provides a concentrated solar mirrors for dishes or tower solar tracking concentrator systems. According to the trough solar concentrating systems usually, its concentrated heat pipe requires a vacuum glass tube and metal packaging, technical difficulty and high cost. According to the present invention, slotted pipes of the solar heating tubes of the condenser system formed by a metallic or non-metallic high temperature resistance, shifting sands in the turning process, consistently very good mix, which greatly increases the heat transfer effect. The pressure of the flowing sand is increased at atmospheric pressure in the pipe, so as ro implement low-cost manufacturing.

### Brief Description of Accompanying Drawings

Figure 1 is a solar concentrator produces high temperature and high pressure gas flow chart.
Figure 2 shows solar schematic diagram of high temperature and high pressure air.
Figure 3 is a solar concentrator schematic diagram of high temperature and high pressure steam.
Figure 4 is a flowing sand of thermal storage tank dimensions, including local amplification of the fire resistance of fire-brick side walls.
Figure 5a-5c is a swirlwind heat exchanger structure.
Figure 5d is another cyclone heat exchanger structure.
Figure 5e and 5f are another swirlwind heat exchanger structure.
Figure 6a and Figure 6b is a sand-water/steam generator heat exchangers structure diagram.
Figure 7a-7c is another thick heater diagram.
Figure 8a and 8b respectively is the top side of the steam heat exchanger, profiles.
Figures 9a and 9b is the dish solar concentrator or tower structure schematic diagram of sunglasses.
Figure 9c is a dish solar concentrator or tower sunglasses rotate the structure diagram.
Figure 9d is another dish solar concentrator or tower sunglasses rotate the structure diagram.
Figure 10 is a structure of the trough solar concentrator heat pipe principle diagram.

### Best Mode for Carrying out the Invention

Utilizing sand's solidity, fluidity, high temperature resistance, corrosion resistance, low-cost, especially being able to be stacked, this invention provides to build solar heat energy storage tank which is of large capacity, of being able to long-term storage with flowing sand as energy storage materials and work medium. The heat storage tank allows sunlight heat sand to high temperature by intermittently input but by continuous and stable output. Addition to the sand, the invention is equally suitable for all other particulate matter and their mixtures with similar properties as flowing sand, i.e., solidity, fluidity, high temperature resistance, corrosion resistance, low-cost, especially those particulate matter and their mixtures which are able to be stacked.

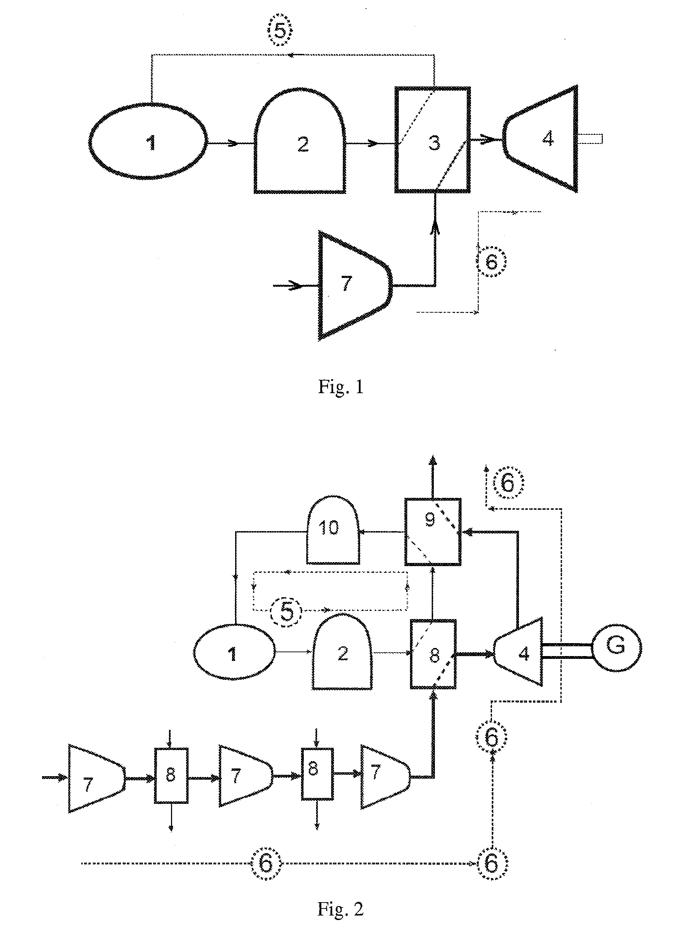

According to one aspect of the present invention, as shown in Figure 1, it provides a method and system to generate steady, high temperature, and high pressure gas to drive turbines 4 for generating power or for industrial use in all weather condition and in continuous manner using solar energy. The system consists of a sun track concentrated device 1, a heat storage tank 2, and a heat exchanging device 3 between a flowing sand 5 and gas or liquid 6, and a flowing sand 5. The sand medium 5 is heated to high temperature through sun track concentrated device 1 directly and indirectly, and then transfer to the heat storage tank 2 where the heat energy is stored in heat energy; then the medium flowing sand is outputted steadily from the heat storage tank. Finally, high temperature and high pressure gas 6 is generated through the heat exchange device 3 between the hot medium 5 and the work gas 6. The pressures of the gas or liquid 6 at atmospheric pressure rise by adding pressure with pressurization equipment 7.

According to another one aspect of the present invention, as shown in Figure 2, it provides a method and system to generate steady, high temperature, and high pressure air to drive turbines 4 for generating power or for industrial use in all weather condition and in continuous manner using solar energy. The sand medium 5 is heated to 800°C -1500°C high temperature through sun track concentrated device 1 directly and indirectly, and then transfer to the heat storage tank 2 where the heat energy is stored in heat energy; the medium flowing sand is then outputted steadily from the heat storage tank. The air at room temperature is compressed by air compressors 7 at level I, the temperature rises, then air is cooled by changing heat between the air and the flowing sand for cooling air (different from the medium sand 5, not shown in figure) with the cyclone heat exchanger 8. The air is compressed with air compressor 7 for further level II compression, then to cool by exchanging heat with cyclones heat exchanger 8; then the air is compressed at level III air compressor 7; then is outputted to the cyclones heat exchanger 8 to exchanging heat between the air and the medium sand from the storage tank, where the pressured air is heated to 700°C-1400°C, then this high temperature high pressure air is transferred to turbo-machine 4 for turbine to generate power. The hot air after turbine is send to a heat exchange device, settling chamber heat exchanger 9 to heat the medium sand 5; afterwards, the medium sand 5 is sent to the heat storage tank with smaller size 10, then to send back to concentrated Sun concentrated device 1 for medium recycling. By cooling the pressured air to a lower temperature, with sand cooling air and by absorbing the residue heat in turbine exhaust air into the medium sand, the system efficiency is largely enhanced comparing to the simple cyclones gas turbine.

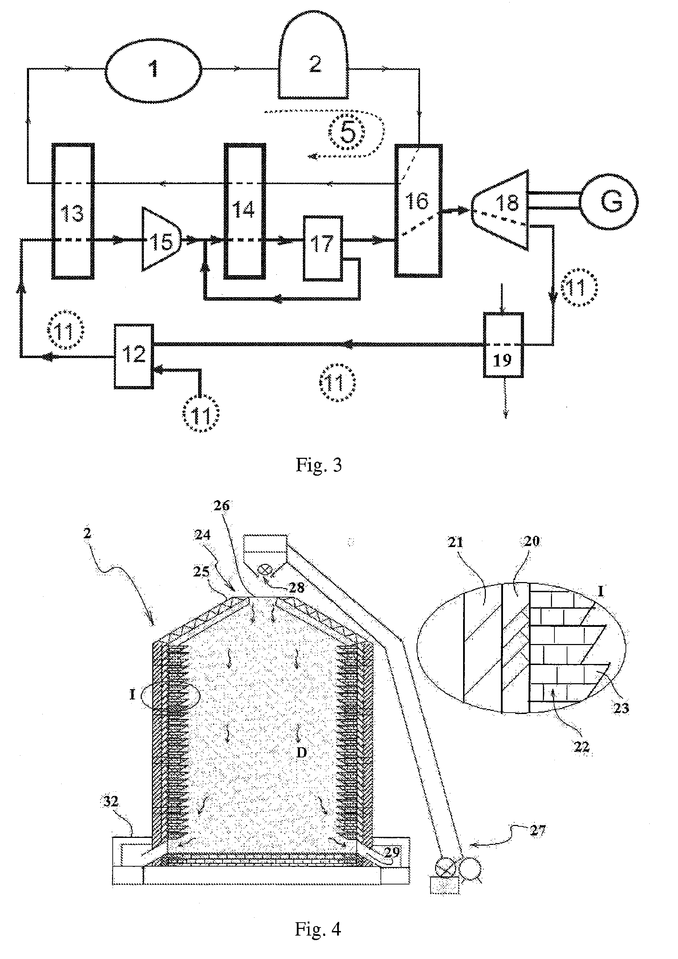

According to another one aspect of the present invention, as shown in Figure 3, it provides a method and system to generate steadily high temperature and high pressure steam to drive turbines 4 for generating power or for industrial use in all weather condition using solar energy. The sand medium 5 is heated to 400°C-650°C high temperature through sun track concentrated device 1 directly and indirectly, and then transfer to the heat storage tank 2 where the heat energy is stored in heat energy. The processed water 11 by the processor 12 is preheated to around 90 °C by the sand-water heat exchanger, then the water pass into pressure pump to pressurize to 2-10MPa. By exchanging heat between the water and the sand transferred from the superheater 13, the saturated steam is generated by the steam generator 14. After making the saturated steam - water separation in the steam drum 17, the water returned to the former level, (before steam generator 14), while the saturated steam 16 transfer to the superheater 16, to be heated further by transferring heat from a high-temperature flowing sand 5 transferred from heat storage tank 2. Then after, supersaturated steam, with high temperature (350-600°C) and pressure at 2-10MPa is generated by the superheater 16. Then the supersaturated steam is transferred to steam turbine 18 for turbine for generating power. The steam is then sent to the condenser 19 to condensate into water, to enter the water processor 12 for recycling use.

To further improve the efficiency, a reheater connected to the outlet of the steam in the intermediate level of turbine 18 can be equipped with, where the steam is reheated, then transfer to steam turbine in the next level. The structure of reheater is the same with that of the superheater 16.

In addition, the present invention provides a thermal storage tank 2, as shown in Figure 4, whose the main structure is of tube structure or other appropriate (optimal for cylinder). Side walls of heat storage tank 2 from the inside to the outside consist of the refractory layer 22, insulation layer 20 and wall sealing layer 21. Refractory layer 22 is constructed by special type brick 23, whose upward surface inside the tank 2 is water level while downward surface is bevel. The angle between the bevel and the water level is smaller than the repose angle of sand (30°). When the flowing sand 5 fall down naturally under the force of gravity near the internal side wall of heat storage tank 2 the sands 5 stack into cone-shaped layer by layer. Only the most prominent line in the downward surface of bricks contacts sands 5 while the rest part of this surface remains separate from sand 5. Bevel of Special-shaped brick 23 can also be replaced by other shapes, as long as it meets the requirements that it is within the repose angle. Special brick 23 is built by high temperature resistant materials. Insulation layer 20 is built by materials being lightweight, high temperature resistant, good thermal insulation performance of materials (such as nano-silica super thermal insulation materials). The wall sealing layer 21 is formed by the pouring of concrete. In the refractory layer 22 of the heat storage tanks 2 dilatation joints is equipped with circumferentially (not shown). For every several floors there exist longer bricks span fire-resistant layer 22 and wall sealing layer 21, to ensure structural stability, robustness. The foundation of the thermal storage tank 2 consists of laying high temperature resistant bricks, insulation, and reinforced concrete foundation from the upside to the downside. The top part 24 of thermal storage tank 2 is a cone 25 made of light steel structure truss, with the platform on the center top, where inlet 26 of sand is equipped with to connect pneumatic input devices 27 and the flowing sand outlet 28. In the internal pipeline of pneumatic input devices 27, lightweight thermal insulation is paved, with peripheral waterproof protection and sealing materials. Medium flowing sand 5 flows along direction by shown by arrow D from upside to downside, flowing out from the exit 29 to the water level ring channel in angle which is greater than friction angle of inclination (optimization for 45 degrees corner), and export to some other transportation equipment through air slot or conveying belt equipped in the ring channel (not shown in the figure).

For tower type solar concentration system, these pneumatic input devices 27 may be omitted, through input flowing sand 5 to the heat storage tank 2 directly via the inlet 26.

According to this invention, flowing sand 5 heated by the sun concentrating mirror 1 is transported from the bottom to the top 24, by pneumatic conveying equipment 27, through the inlet of platform enter into storage heat tank 2, flowing sand 5 moves down slowly in whole, flowing out from exit in the bottom, after staying for several days in storage hot tank 2. It meets the rule of first in, first out, which guarantee the temperature uniform of the flowing sand in storage heat tank 2. the medium flowing sand 5 flows from upside to downside, flowing out from an exit 29 to a horizontal ring channel in angle which is greater than friction angle of inclination, and export to some other transportation equipment through air slot or conveying belt equipped in the ring channel. In the circumference of the bottom of the storage heat tank 2, a set of exits 29 are equipped with uniformly to the horizontal ring channel in an angle which is greater than the friction angle of inclination, so that the flowing sand 5 flows out from these exits a ring wall 32 with a rectangle section is equipped with, from inside to outside there are also paved with a refractory layer, an insulation layer, and an outside wall sealed layer; collecting the flowing sand 5 flowed out from every channels, and exporting to some horizontal exits at bottom through transportation equipment such as air slot or conveying belt equipped in the ring channel.

To increase the absorption of sunlight by flowing sand quicksand, this invention provides a method increasing black color on the surface of the flowing sand, for receiving sunlight directly, by surface modification treatment with carbide, thereby significantly increasing the absorption of sunlight. Specific process is that the sand and carbon-rich material (natural gas, coal gas, bitumen, oil, flour, etc) after the mixing, heated to above 600°C high temperature under conditions of isolating air, the surface can be turned into structures of carbon black, and can become even more stable structure such as the graphite and silicon carbide structure at even higher temperatures. After surface modified with increased black, flowing sand can greatly increase the absorption of sunlight, and can increase the thermal conductivity. Sand particle size is of 0.1-1.0mm. Sand particle size in the range is good for achieving very favorable flowing and heating. Specific implementation method is that, the high temperature sand heated by the sun tracking concentrating solar energy is mixed in proporation (e.g. 100:1-10:1, preferred to be 30: 1) with pulverized coal in vacuums, keeping up to the surface black. This process can also be implemented at the solar heat storage tank 2.

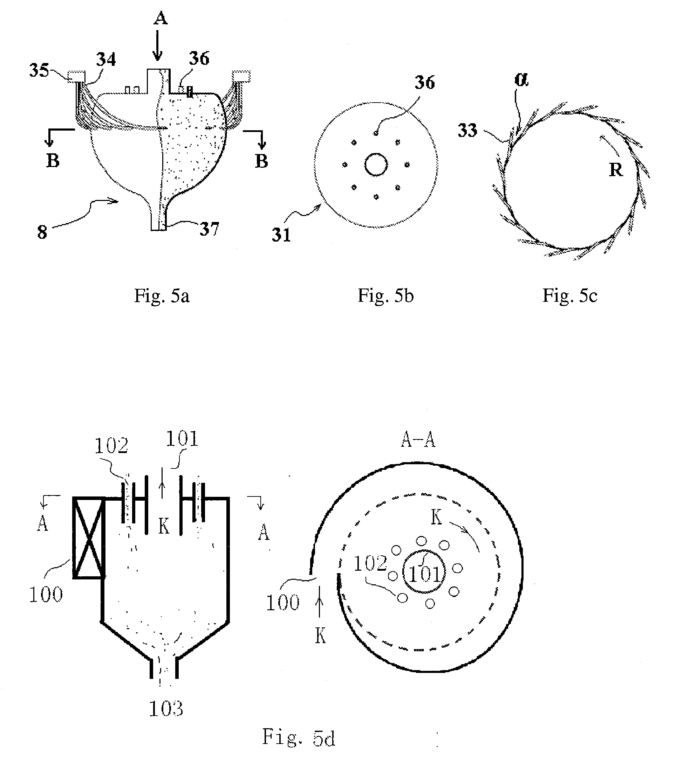

As shown in Figure 5a to 5c, according to the present invention, it provides a cyclones heat exchanger 8 for realization of direct heat exchange between air and flowing sands, which is in a compact form to achieve mixing, heat transfer, and separation of the sand and the air. The main body of the cyclones heat exchanger 8 is ring structure 31. On the outer edge of the ring there are uniform pores along the ring in which equal pipes 33 are inserted in 10°-20° uniform inclination angle α. The other end 34 of the pipes 33 are inserted into tube plate 35, connected to the gas inlet through tube box. High-speed gas flows through the entrance into the ring main body 31 of cyclone heat exchanger 8, doing rolling motion along the arrow R, flowing out upward in the middle of it. 4 or 8 holes 36 in the upper middle of Cyclone heat exchanger 8 are open with axial symmetry, into which flowing sand 5 flows through the pipeline. Within cyclones heat exchanger 8 air swirls and flows inward along the radial direction, while flowing sand 5 swirls and flows outward under the action of centrifugal force. Gases and flowing sand 5 move inversely along the radial direction, thus achieving counter current heat exchange between gases and flowing sand 5. Collection mouth 37 is equipped with in the middle of the bottom of the 31, to collect flowing sand 5 for output.

In another embodiment shown in Figure 5d, the cyclone heat exchanger 8 entrance part consists of the volute-shaped air intake 100, used for direct heat exchange between air and flowing sands. Preferred cross section of the entrance is rectangle 100. Heat exchanger of air into the cyclone 8, along the direction of the arrow K as shown in figure for high-speed swirling, flowing out from exit 101 located on the upward center. High temperature sand 5 from uniform distributed inlet pipes 102 enter into cyclone heat exchanger 8 in which on the one hand it rotates as swirls, on the other hand it flows outward along the radial direction under the action of centrifugal force, flowing out from exit 103 beneath the cyclone 8. Gases and flowing sand 5 move inversely along the radial direction, thus achieving counter current heat exchange between the gas and the flowing sand 5.

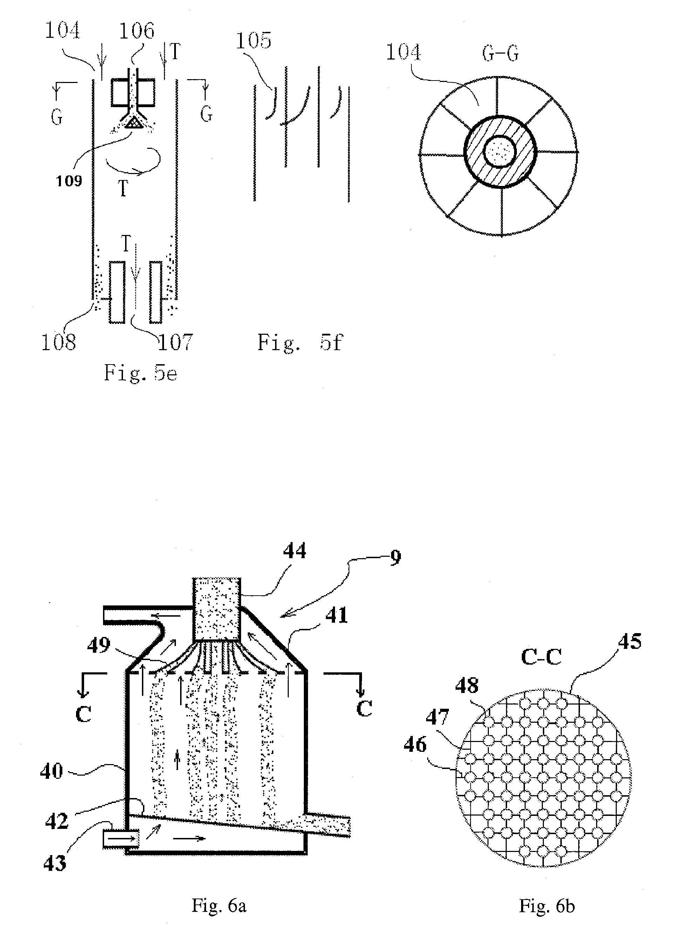

Figure 5e and 5f shows another implementation example, the swirl tube heat exchanger 8 is constituted by the swirl tube. Passing the air guiding-plate 105 the high-speed gas from enters into the swirl tube through the entrance 104, making the helical motion along the arrow T direction, also along axial direction downward and along radial direction inward movement, then flowing out from exit 107. Circular pipelines 106 with trumpet-shaped openings at the lower end are equipped with in the upper central of the swirl tube 8. The lower end of the trumpet-shaped openings is equipped with the cone 109, with the circular cone tube slit. The sand 5 flows in the circular cone tube slit from the openings through the pipeline 106, entering into the main body of swirl tubes 8. It then moves together with the air along the arrow T direction. Simultaneously, the flowing sand 5 moves from inside to outside along the radial direction under the action of centrifugal force and the downward with wind, then flowing out from the ring-like exit 108. Gases and flowing sand 5 move inversely along the radial direction, thus achieving counter current heat exchange between the gas and the flowing sand 5.

As illustrated in Figure 6a and Figure 6b, according to the present invention, it provides a settling chamber heat exchanger 9 for realization of direct heat exchange between air and flowing sands. The lower part of the settling chamber 9 is cylinder or other shaped-tube 40, the upper part is cone-shaped structure 41. The internal of the cylinder paves lightweight thermal insulating refractory material while the external is covered by welded metal or brick. The bottom of the settling chamber 9 paves lightweight thermal insulation layers and ground layers. Near the bottom of the cylinder 40 a layer with uniform ventilation holes consisting of heat-resistant materials 42 is set with 3°-15° inclination with partly cylinder-shaped exit. Gas gets into the external entrance 43 to the settling chamber 9 from the higher end of the high temperature resistant material 42 to the lower one. The cone angle of the tapered top cover 41 is greater than the repose angle of sand 5. A cylinder container 44 is equipped with in the top center of the tapered cover 41, being the entrance of sand 5. A grid 45 built by the cross rod 46 and vertical post 47 is equipped with at the bottom of the cone structure. On each lattice point a funnel vessel 48 is equipped with to connect the top cylinder container 44 by pipelines 49. These pipelines 49, on the one hand causes the flowing sand 5 to flow in each funnel-shape vessel 48 from the top cylinder container 44, on the other hand, together with metal or nonmetallic grid 45, plays support function to circular cone structure 41. Flowing sand 5 flows downward uniformly from each funnel-shape vessel 48 while the air flows upward uniformly, achieving counter current heat exchange between the air and the flowing sand 5.

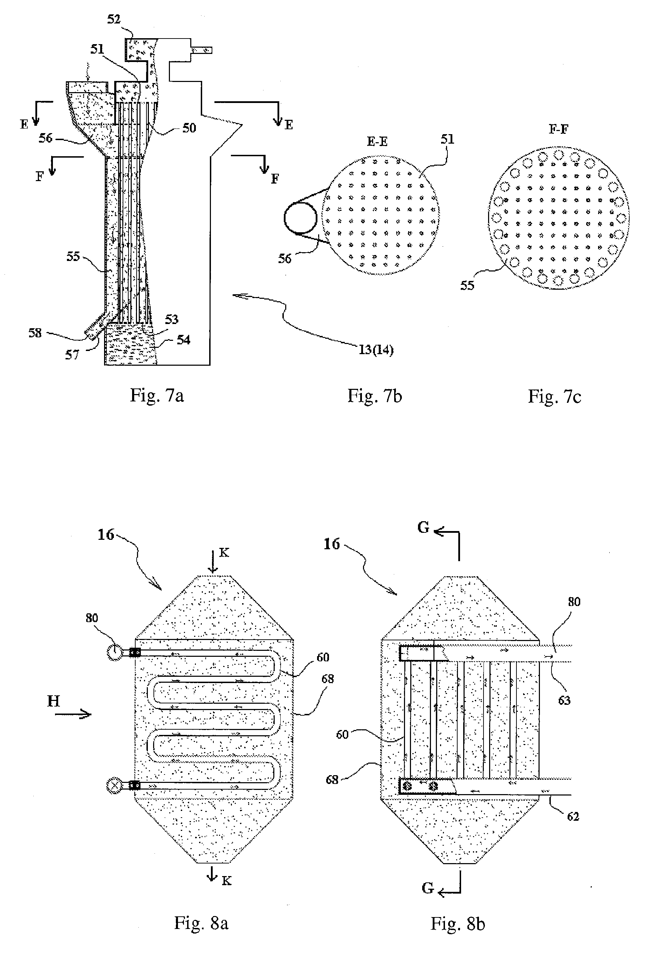

As shown in Figure 7, this invention provides a sand-water heat exchanger 13 (steam generator 14), which can be used to achieve the high temperature heat exchange between sand and water to produce hot water or saturated water steam. The basic structure is the steel pipelines 50 arranged vertically, parallelly, and uniformly in the lateral section. The upper orifices of steel pipe 50 weld the tube plate 51, connected to a steam drum 52. The lower orifices of steel pipelines 50 weld a tube plate 53, connected to a water tank 54. The whole steel pipelines 50 is covered by a periphery of a cylinder 55. The upside of periphery of the cylinder 55 connects the funnel 56 under the upper tube plate 51. The steam conduit 56 passes through the funnel. The downside of periphery of cylinder 55 connects an inclined plate 57 in an approximately 45° above the lower tube plate 53. The outlet 58 is equipped with in the intersection parts of periphery of cylinder 55 and inclined plate 57. The flowing sands enter into upper funnel 56, flowing to the inclined plate 57, passing through the slits among the steel pipelines 50 and the periphery of cylinder 55, flowing out from the outlet 58. The flowing capacity of sand is adjusted by the dimension of outlet 58. The high-temperature flowing sand 5 flows downward under the gravity force in the metallic pipeline 50 extroversion lower reaches. The flowing sand and water realize heat exchange in the inverse flowing, the water in pipeline is heated to higher temperature or to produce the steam.

As shown in figures 8a and 8b, this invention provides a flowing sand superheater 16, which can be used to generate superheated steam 80 by exchanging heat directly between high temperature sand 5 and saturated water steam. The flowing sand superheater 16 is formed by juxtaposing the multi-rows of snake-shaped steel pipelines 60. Each row of snake-shaped steel pipelines 60 may consist of a sort of pipelines. Each pipeline is blended repeatedly in terms of certain length. Exit and entrance of each row of snake-shaped steel pipelines 60 are welded to tube plates in the exit and entrance steam orifice 62, respectively. Pipelines 60 of superheater 16 were covered within the cube vessel 68. Upside of the superheater 16 is in the inversion funnel shape while the downside is of the erect funnel shape. The high-temperature flowing sand 5 flow in and out along the direction shown as arrow K, exporting to of funnel-shaped exit. The current capacity can be controlled by adjusting dimension of the exit.

The present invention provides a sun tracking concentrating system 1 may be solar dish concentrating system, the tower solar concentrating system, or tough concentrating system.

As shown in 9a, this invention provides a sun tracking concentrating system to be used for the dish concentrating system, the tower concentrating system. The sun -tracking concentrating device 1 consists of sun concentrating mirror 75, triangular bracket 71, the slewing bearing with gear 72, gear reducer controlling the horizontal direction control section 74, and gear reducer controlling the forward and backward direction and control section 81; the slewing bearing 72 is equipped with horizontally a in fixed triangular bracket 71; two coaxial ball bearings 73 are equipped with above the rotating disk of the slewing bearing 72, rotating with the rotation of the slewing bearing 72 in the horizontal direction; The shaft of slewing bearing 72 and the shaft of ball bearing 73 of the shaft perpendicular with each other and intersect at a fixed point; sun concentrating mirror 75 are symmetrically fixed to the shafts of two ball bearing 73, the height of the sun concentrating mirror 75 on the two ball bearing 73 are fixed so that the center of gravity of sun concentrating mirror 75 overlaps with the fixed point. In this way, solar concentrator loads is loaded into the two hinge moment approximation to zero on each axis, so solar concentrator 1 can withstand greater loads, including wind, conducive to solar rotation, controlling, and tracking of the condenser, in favour of reducing the solar concentrator 1 weight and lower manufacturing costs of solar concentrator 1.

Triangle bracket 71 may also be made of reinforced concrete, hollow cylindrical pipe vertically instead.

Sun concentrating mirror 75 by the multi- block boundary square truss steel structure in the same mirror mosaic in the middle of the rectangular area of about 1/20-1/8 vacant. Sun concentrating mirror 75 in the horizontal direction and with the rotary bearing 72 in the longitudinal direction of the ball bearing 73 with the rotation of the rotation, so that the sun concentrating mirror 75 to achieve a fixed point at the center of rotation in any direction in space. The Earth's rotation and revolution of the movement of the sun's rays is calculated for a given location on the earth, in a given time point, adjust the control level respectively, and the front-rear direction of rotation direction of rotation, in order to achieve tracking of sunlight. Sun concentrating mirror 75 pairs of horizontal trace is controlled by the motor rotation speed reducer 74, driven slewing gear 72 is rotated. Front and rear direction of rotation of the control devices were made to achieve the following three.

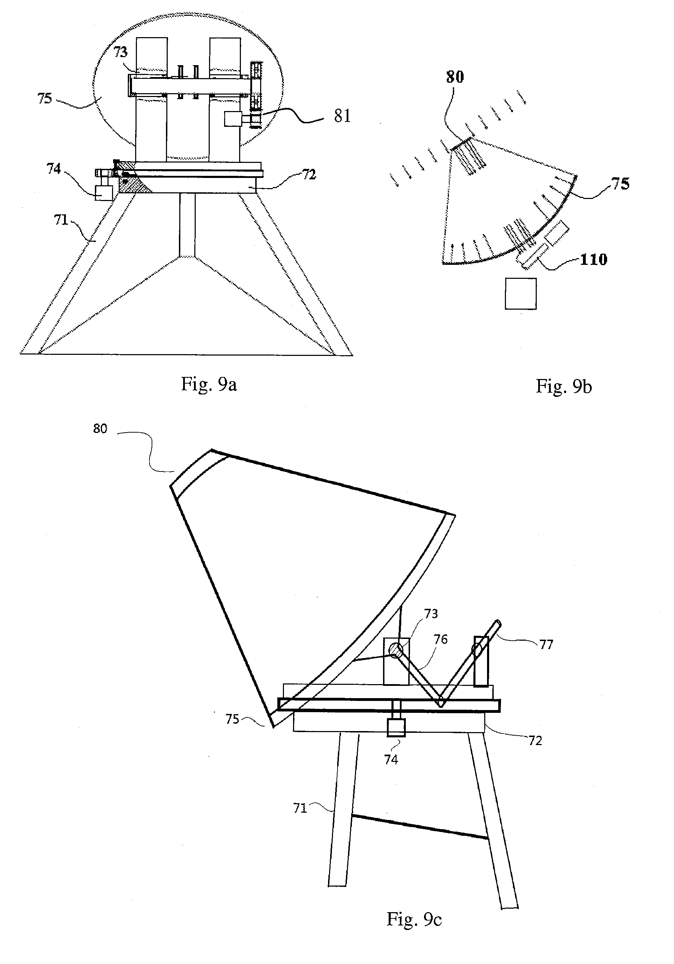

One shown in Figure 9a, the front and rear direction so that rotation of the gear unit and the control section 81 of the output shaft 73 through a coupling shaft directly connected to the ball bearing. Reducer input shaft 81 driven by the rotation of the control motor to drive the output shaft, ball bearing 73 so as to drive shaft rotation, to achieve the solar elevation condenser 75 before and after the rotation control.

Second, as shown in Figure 9c, the length is less than the radius of the rotary bearing lever 72 fixed at one end 76 of the shaft of the ball bearing 73, the other end of the screw 77 can be self-locking end (fixed end) is hinged. The other end of the screw 77 (active side) hinged to the rotation of rotary bearing plate 72, the lever member 76 and the screw 77 and the ball bearing 73 in a plane perpendicular to the axis, are rotated with the rotary bearing 72 and the horizontal synchronous rotation. Adjusting screw 77 with a motor 72 for rotating the rotary disc bearing the contact point, the screw 77 to adjust the length of the free end of the fixed end, in order to change the elevation angle of the lever 76, rotation of drive shaft ball bearing 73, in order to achieve before and after the rotation of the sun elevation condenser control.

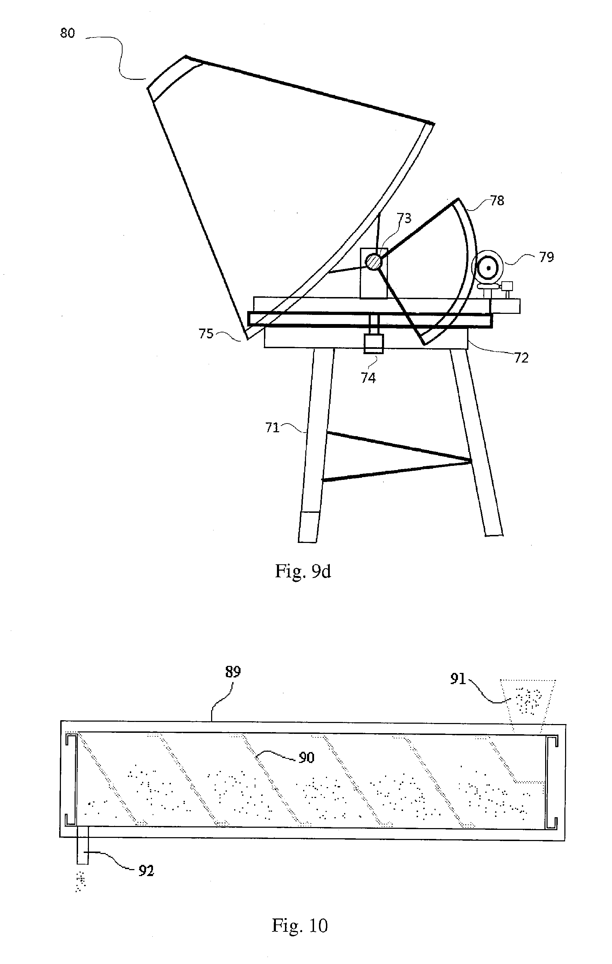

Third, as shown in Figure 9d, the slewing radius is smaller than the inner diameter of the gear 72 mounted on the ball bearing 78 on the shaft 73. In the single-head worm gear 79 is connected through a coupling on the output shaft pinion gear to drive gear 78. Worm gear 79 on the pitch circle of the lead angle is less than 3.5°, so that to achieve self-locking worm gear. Worm reducer input shaft 79 driven by the rotation of the motor control, drive gear 78, so as to drive the rotation shaft ball bearing 73, to achieve the condenser lens 75 before turning the sun elevation angle control. To save material, the gear 78 also can be 1/4 - 1/2 of the circumference of the sector gear instead.

For the dish concentrator solar condenser 1, its sun concentrating mirror 75 is made up of small focal length the same square spherical mirror through truss steel mosaic with focal large outer boundary is rectangular spherical mirror 75, the side length and focal ratio of a preferably selected as 8/12. Mirror in the middle of a rectangular area of about 1/20-1/8 vacant. When the spherical mirror for tracking when sunlight is focused onto a condenser lens 75 to focus the sun as the center of the focal spot on. The advantage of using a spherical mirror that is easy to implement in industrial mass production, thereby reducing manufacturing costs. Concentrating sunlight in multiples of up to 2000 times, sufficient to meet the present invention provides a high-temperature thermal solar concentrating system requirements. Further, the condenser lens 75, the sun line axis, the length of about 2/3 is set to a fixed focal length of the spherical mirror 80, the condenser lens 75 by controlling the rotation of the sun, sunlight can be reflected to the vicinity of the base slewing a fixed point on the focal spot, when the sun is still condenser condenser multiples of up to 800-1000 times, enough to meet the present invention provides a system for concentrating solar thermal requirements.

Figure 9b, then heat the sphere 110 is placed on the focus mirror 80, with the horizontal of approximately 45° angle. Then heat to 110 with silicon carbide or other material having low reflectance of visible light, then the bottom of the outer layer 110 heat insulating material coated with a light-weight, based on the middle of the spherical mirror 80 the beam spot characteristics of high light intensity, then heat 110 the middle of the concave shaped to form a circular groove, the top of the high temperature, and transparent to visible light, infrared light reflecting good material (such as nano -hole SiO₂ super insulation) cover. Sand under the action of gravity, via indirect heat transparent top 110 and silicon carbide heating out of the gap between the main body.

For a tower condenser sun mirror 1, its sun constrating mirror 75 may be of the same size squares plane mirror mosaic steel through truss a whole for the plane mirror or other curved mirror. Mirror in the middle of a rectangular area of about 1/20-1/8 vacant. The plane mirror condenser system helps reduce the cost of the tower. Using Fig 9a, 9c, 9d given sunlight tracking system to adjust to as many as 10,000 sunbeam tower mirror surface placed on the same system, the tower on the top connected to the condenser heat. Sand from the bottom by the conveying gas to the top of the column, under the action of gravity through the heat received, the process flows downward sunlight is focused heating. Lower part of the funnel into the pipe insulation, heat storage tank directly into the post 2.

Shown in Figure 10, the present invention provides a tracking type solar heat pipe condenser system. The heating pipe 89 by a high temperature material, the outer pipe 89 has a heat insulation, through the visible light, but a good material for reflecting infrared light (such as light Silica super insulation material) such that sunlight 5 can transmit into the heating sand particles. Pipe 89 equipped with a spiral groove 90. One end of pipe 89 has a funnel-shaped inlet 91, 5 sand particles into the spiral groove 91 through the inlet 90, the other end of pipe 89 outlet 92, 5 sand particles collected through an outlet 92 out of the heat storage tank 2. Sunlight by a trough solar concentrator mirror tracing, is focused to the heating pipe lines. When the spiral groove 90 is rotated, the sand particles from the helical groove 5 of the inlet 90 toward the outlet 92 91 movement, while moving, 5 sand particles are mixed well, 5 sand particles along the pipe 89 is gradually heated up to temperatures. 89 the sand pipe 5 is heated at atmospheric pressure, so pipe 89 can be manufactured at low cost.

The present invention provides a condenser type solar concentrator system, which combines the characteristics of the tower was built. Mirror composed of a planar mirror composed of a plurality of slot to focus sunlight on a pipeline, each trough mirror constituted by a plane mirror, the use of single-axis tracking system to track the sun. Transparent to visible light by the pipe wall, the infrared light reflected good, good insulation properties of lightweight materials (such as nano -hole SiQ2 super- insulating material) is made outside of the pipe covered by glass. One end of the pipe to be warmed turbine atmospheric air through heating pipes directly. The end of the pipe, high pressure heated air into the present invention provides a settling chamber 9 to the heat exchanger to transfer heat to the working fluid sand 5, after the sand is input to the heat storage tank 2 storage.

## Claims

1. A solar thermal energy storage and high-temperature gas generation system, **characterized in that**:
the system comprises a sun tracking concentrating device (1), a heat storage tank (2), and a heat exchanging device (3) with flowing sand as medium (5);
the heat exchanging device (3) exchanges heat between the flowing sand (5) and gas or liquid (6);
the medium sand (5) is heated through the sun tracking concentrating device (1), and then transported to the heat storage tank (2), where the heat energy is stored; then the medium flowing sand (5) is outputted steadily from the heat storage tank (2), transferring heat to high pressure gas or liquid (6) to be heated through the heat exchanging device (3), so as to generate high temperature and high pressure gas.

2. A solar energy storage and the high temperature gas generating system, used for a high temperature and high pressure air generating system, **characterized in that**:
the system comprises a sun tracking concentrating device (1), a heat storage tank (2), and a heat exchanging device (3) with flowing sand (5) as medium;
the medium sand (5) is heated directly or indirectly to 800°C-1500°C through the sun tracking concentrating device (1), and then transported to the heat storage tank (2) where the heat energy is stored;
the air at room temperature is compressed by an air compressor (7) at level I and level II compression, exchanging heat, so as to make the pressure of the pressed air continues rising; then,
the air is further compressed by the air compressor (7) at level III, then outputted to the heat exchanging device (8) to exchange heat with the high temperature medium sand (5) outputted from the heat storage tank (2), where the pressured air is heated to 700°C-1400°C, then this high temperature and high pressure air is transported to turbo-machine (4) for turbine to generate power,
the hot air after turbine is send to the heat exchanging device (9) to heat the medium sand (5); afterwards, the medium sand (5) is transported to the heat storage tank (10) with smaller size, then transported back to the sun tracking concentrating device (1) for medium recycling.

3. A solar energy storage and the high temperature gas generating system, used for a high temperature and high pressure air generating system, **characterized in that**:
the system comprises a sun tracking concentrating device (1), a heat storage tank (2), and a heat exchanging devices (3), with flowing sand (5) as medium;
the medium sand (5) is directly or indirectly heated to 400°C-650°C through the sun tracking concentrating device (1), and then transported to the heat storage tank (2) where the heat energy is stored;
the water (11) processed by the processor (12) is preheated to around 90°C by the sand-water heat exchanger (13), then made to pass into a pressure pump (15) to pressurize to 3-5MPa; a saturated steam is generated by a steam generator (14) by exchanging heat with the sand transported from a superheater (16),
the saturated steam makes a steam-water separation in a steam drum (17), the water is returned to before the steam generator (14), while the saturated steam is transported to a rear device to be heated further by transferring heat from the superheater (16) ? and the high-temperature flowing sand (5) transported from the heat storage tank (2), to generate a supersaturated steam with 350-550°C and 2-10MPa, then,
the supersaturated steam is sent to steam turbine (18) for turbine for generating power, the steam is then sent to a condenser (19) to condensate into water to enter into the processor (12) for the water recycling.

4. A solar energy storage and the high temperature gas generating system as claimed in claim 1, 2, or 3, **characterized in that**:
a side wall of the heat storage tank (2) from the inside to the outside is composed of a refractory layer (22), an insulation layer (20), and a wall sealing layer (21); the refractory layer (22) is constructed with a special type brick (23), whose upward surface inside the heat storage tank (2) is in horizontal level while downward surface is bevel or a kind of curve between the horizontal level and the bevel surfaces, the angle between the bevel and the horizontal surface is less than the sand's sleeping angle or called standing angle, i.e. the angle of repose of sand, making natural flowing sand (5) in the heat storage tank(2) stacked into cone-shaped rest on the upper honrizontal surface of te bricks (23), on the other hand, only the most prominent line in the downward surface of bricks (23) contacts the sands while the rest part of this surface remains separate from the sand (5).

5. A solar energy storage and the high temperature gas generating system as claimed in claim 4, **characterized in that**: the special type brick (23) is made of high temperature resistant materials; the insulation layer (20) is made of materials being lightweight, high temperature resistant, good thermal insulation performance; the wall sealing layer (21) is formed by the pouring of concrete into steel rib network; the refractory layer (22) of the heat storage tank (2) is being equipped with a circumferential gap for dilatation; for every several floors there exists longer bricks spanning the fire-resistant layer (22) and the wall sealing layer (21); the foundation of the thermal storage tank (2) is with high temperature resistant bricks, insulation layer, and reinforced concrete foundation from the upside to the downside; the top part (24) of the thermal storage tank (2) is a taper(25) made of light steel structure truss, with the platform on the center top, where an inlet (26) of the flowing sand (5) is equipped with; the medium flowing sand (5) flows from upside to downside, flowing out from an exit (29) to a horizontal ring channel in angle which is greater than friction angle of inclination, and export to some other transportation equipment through air slot or conveying belt equipped in the ring channel.

6. A solar energy storage and the high temperature gas generating system as claimed in claim 5, **characterized in that**: the sand inlet (26) on the platform is provided to connect with a flowing sand outlet (28) of a pneumatic input device (27), and inside of the pipeline of the pneumatic input device (27), there are provided with lightweight thermal insulation material, while outside of the pipeline of the pneumatic input device (27), there are provided with a peripheral waterproof protection and sealing material.

7. A solar energy storage and the high temperature gas generating system as claimed in claim 4, **characterized in that**: the main body of the storage heat tank (2) is cylinder, the taper (25) is a cone; in the circumference of the bottom of the storage heat tank (2), a ring wall (32) with a rectangle section is equipped with, from inside to outside, also paving with a refractory layer, an insulation layer, and the outside wall sealed layer; the flowing sand (5) flowed out from every channels is collected by air slot or conveying belt, and exported to a horinzontal exit at bottom.

8. A solar energy storage and the high temperature gas generating system as claimed in claim 4, **characterized in that**: the thermal insulation layer (20) is composed of a nano-silica super thermal insulation material.

9. A solar energy storage and the high temperature gas generating system as claimed in claim 1, 2, or 3, **characterized in that**: increasing black color on the surface of the flowing sand for receiving sunlight directly by surface modification treatment with carbide.

10. A solar energy storage and the high temperature gas generating system as claimed in claim 9, **characterized in that**: the sand and a carbon rich material is mixed and heated to 600°C or above under a condition of isolating air.

11. A solar energy storage and the high temperature gas generating system as claimed in claim 10, **characterized in that**: the high temperature sand heated by the sun tracking concentrating solar energy is mixed in proporation with pulverized coal in vacuums, keeping up to the surface black.

12. A solar energy storage and the high temperature gas generating system as claimed in claim 11, **characterized in that**: the mixing ratio for sand and pulverized coal is 100:1-10:1.

13. A solar energy storage and the high temperature gas generating system as claimed in claim 12, **characterized in that**: the mixing ratio for sand and pulverized coalis 30:1.

14. A solar energy storage and the high temperature gas generating system as claimed in claim 10, **characterized in that**: the carbon-rich material includes natural gas, coal gas, bitumen, oil, and/or flour.

15. A solar energy storage and the high temperature gas generating system as claimed in claim 1 or 2, **characterized in that**: the heat exchanging device (3) adopts cyclone heat exchanger (8), the main body of the cyclones heat exchanger is a ring structure (31), on the outer edge of the ring (31) there are provided uniform pores, in which equal pipelines are inserted in 10°-20° uniform inclination angle α, while the other ends (34) of the pipelines (33) are inserted into a tube plate (35), connected to a gas inlet through a tube box; a high-speed gas flowing through the entrance into the ring main body (31) of the cyclone heat exchanger (8), swirling and flowing out upward in the center of it; a plurality of holes (36) in the upper middle of cyclone heat exchanger (8) are opened with axial symmetry, into which the flowing sand flows through the pipeline; within cyclones heat exchanger (8), air swirls and flows inward along the radial direction, while the flowing sand swirls and flows outward under the action of centrifugal force; the gases and the flowing sand move inversely along the radial direction, thus achieving counter current heat exchange between the gases and the flowing sand; a collection mouth (37) is equipped with in the center of the bottom, to collect the flowing sand for output.

16. A solar energy storage and the high temperature gas generating system as claimed in claim 1 or 2, **characterized in that**: the heat exchanging device (3) adopts a cyclone heat exchanger (8), with entrance section consisting of a volute-shaped air intake (100); air entering into the cyclone heat exchanger (8) swirls in high speed, flowing out from outtake (101) located on the upward center; the high temperature sand (5) enters into the cyclone heat exchanger (8) from uniformly distributed inlet pipes (102), in which on the one hand it rotates as swirls with air, on the other hand it flows outward along the radial direction under the action of centrifugal force, flowing out from an exit (103) beneath the cyclone; the gas and the flowing sand (5) move inversely along the radial direction, thus achieving counter current heat exchange between the gas and the flowing sand.

17. A solar energy storage and the high temperature gas generating system as claimed in claim 1 or 2, **characterized in that**: the heat exchanging device (3) adopts a cyclones heat exchanger (8) which is composed of swirling tubes (8); passing the air guiding-plate (105), the high-speed gas enters into the swirl tube through the intake (104), making the helical motion, also moving along axial direction downward and along radial direction inward, then flowing out from an outtake (107); a circular pipeline (106) with trumpet-shaped openings at the lower end is equipped with in the upper central of the swirl tube; the lower end of the trumpet-shaped openings is equipped with the cone (109), with the circular cone tube slit; the sand (5) flowing into the circular cone tube slit from the openings through the pipelines (106), entering into the main body of swirl tubes (8); then moving together with the air; simultaneously the flowing sand moving from inside to outside along the radial direction under the action of centrifugal force and the downward with wind, then flowing out from a ring-like exit (108); the gas and the flowing sand moves inversely along the radial direction, thus achieving counter current heat exchange between the gas and the flowing sand.

18. According to claim 1, 2, or, 3, a solar heat storage and high-temperature gas generating system, **characterized by**: wherein the sun -tracking concentrating device (1) including sun concentrating mirror (75), triangular bracket (71), the slewing bearing with gear (72), gear reducer controlling the horizontal direction control section (74), and gear reducer controlling the forward and backward direction and control section (81); the slewing bearing (72) is equipped with horizontally a in fixed triangular bracket (71); two coaxial ball bearings (73) are equipped with above the rotating disk of the slewing bearing (72), rotating with the rotation of the slewing bearing (72) in the horizontal direction;
The shaft of slewing bearing (72) and the shaft of ball bearing (73) of the shaft perpendicular with each other and intersect at a fixed point; sun concentrating mirror (75) are symmetrically fixed to the shafts of two ball bearing (73), the height of the sun concentrating mirror (75) on the two ball bearing (73) are fixed so that the center of gravity of sun concentrating mirror (75) overlaps with the fixed point.

19. According to claim 18, a solar heat storage temperature gas generating system, **characterized in that**: the sun concentrating mirror (75) is spliced by multi-block squared mirrors with same boundary in truss steel structure, with the central 1/20- 1/ 8 rectangular area vacant.

20. According to claim 19, wherein the solar heat storage and high-temperature gas generating system, **characterized in that**: the output shaft of gear reducer controlling the forward and backward direction and control section (81) directly links to the rotating shaft ball bearing (73) through a coupling and a of.

21. According to claim 19, a solar heat storage and high-temperature gas generating system, **characterized by**: wherein one end of the radius rod (76) with length less than the radius of the slewing bear (72) is fixed at the shaft of the ball bearing (73), with the other end hinge joint the self-locking screw (77); the free end screw (77) hinged to the rotating disc of the slewing bearing (72), the plane determined by the radius rod (76) and the screw (77) is perpendicular to the shaft of ball bearing (73), which rotate horizontally with the slewing bearing (72); by adjusting the position of the contact point the screw (77) on the rotating disc of the slewing bearing (72) with a motor, to adjust the length between the free end and the fixed end of the screw (77), to change the lever (76) in elevation, driving rotation of the shaft of ball bearing (73).

22. According to claim 19, a solar heat storage and high-temperature gas generating system, **characterized by**: wherein gear (78) with diameter less than the radius of slewing bear (72) is mounted on the shaft of the ball bearing (73); in the output shaft of single head worm gear (79) through a coupling connected to the pinion gear to the drive gear (78); on the pitch circle of the worm gear (79) worm lead angle is less than 3.5 °, so that the worm gear to achieve self-lock. Rotation of the input shaft of the worm gear (79) is driven by the controlling motor, then driving gear (78), so as to drive the shaft of ball bearing (73) rotation, to achieve controlling to the rotation of the elevation angle the sun concentrating mirror (75).

23. According to claim 22 and a solar heat storage temperature gas generating system, **characterized by**: wheel (78) including 1/4 - 1/ 2 the circumference of the sector gear.

24. According to claim 19, the solar heat storage and high-temperature gas generating system, **characterized by**: wherein dish solar concentrator is spliced by a set of the spherical mirror with the same focal length and the same squared boundary through the truss steel to form the spherical solar concentrator (75) with the same focal length and the rectangle outer boundary, ratio of the side length to the focal length 8/12; on the central axis with the length of 2/3 of the focal length to the mirror, the sun concentrating mirror (75) is set to a fixed spherical mirror (80).

25. According to claim 19, solar thermal energy storage and high-temperature gas generation systems, **characterized by**: for tower solar concentrator, its solar concentrator (75) by the square of the same size flat mirror by splicing with truss steel structure, overall for flat or curved glass.

26. According to claim 1, 2 or 3, wherein the solar heat storage and high-temperature gas generating system, **characterized in that**: the sun light reflected by the multi-tough concentrating mirrors, concentrate to a pipe, where each tough concentrating mirror is composed of plane mirrors, taking single-axis tracking system to track the sun; the inner wall of the pipe composed by a transparent to visible light, good reflection to infrared light, good thermal insulation made of lightweight material, the outer pipe covered by glass; a fan is equipped with at one end of the pipe, to flow in the air at atmospheric pressure to be heated directly through the pipes.

27. According to claim 1, 2 or 3, wherein the solar heat storage and high-temperature gas generating system comprising: tracking concentrating solar tough system heating pipe (89) consists of high temperature resistant material, the outer layer of pipe (89) equips with a heat insulation, a transparent to visible light, good reflection to infrared light, good thermal insulation made of lightweight material, so that sunlight can enter into the heating sand (5) of the particles; pipe (89) equipped with a spiral groove (90); One end of Pipe (89) has a funnel-shaped inlet end (91), sand (5) particles get into the spiral groove (90) through the inlet (91), sliding from inlet to the outlet (92) on the other end of the pipe (89), output to the heat storage tank 2 is collected; sunlight by the tough tracking after being focused to the heating pipe line; when the spiral groove (90) is rotated, the sand (5) of the particles from the screw groove (90) of the inlet (91) to move toward the outlet (92), while moving, sand (5) of the particles are stirred and mixed along the pipe (89) is gradually heated.

28. A heat storage tank (2), **characterized in that**: a side wall of the heat storage tank (2) from the inside to the outside consists of a refractory layer (22), an insulation layer (20), and a wall sealing layer (21); the refractory layer (22) is constructed by a special type brick (23), whose upward surface inside the heat storage tank (2) is horizontal, while the downward surface is a bevel or a kind of curve between the horizontal and the bevel surfaces, the angle between the bevel and the horizontal surface is less than the angle of repose of sand, making natural whereabouts flowing sand (5) stacked into cone-shaped rests on the horizontal surfaces in the heat storage tank (2), only the most prominent line in the downward surface of bricks(23) contacts sands, while the rest part of this surface remains separate from sand (5).

29. The heat storage tank (2) as claimed in claim 28, **characterized in that**: the special type brick (23) is made of high temperature resistant material; the insulation layer (20) is made of materials with lightweight, high temperature resistant, good thermal insulation performance; the wall sealing layer (21) is formed by the pouring of concrete into steel rib networks; the refractory layer (22) of the heat storage tanks (2) is provided with a circumferential gap for dilatation; for every several floors, there exists longer bricks spanning the fire-resistant layer (22) and the wall sealing layer (21); the foundation of the thermal storage tank (2) consists of a high temperature resistant bricks, an insulation layer, and a reinforced concrete foundation from the upside to the downside; the top part (24) of the thermal storage tank (2) is a taper(25) made of light steel structure truss, with a platform on the center top, where an inlet (26) for the flowing sand (5) is located; the medium flowing sand (5) flows from upside to downside, flowing out from an exit (29) to the horizontal ring channel in an angle which is greater than the friction angle of inclination, and exports to some other transportation equipment through air slot or conveying belt equipped in the ring channel.

30. A heat storage tank(2), as claimed in claim 29, **characterized by**: inlet (26) of sand being equipped with on the platform to connect pneumatic input devices (27) and the flowing sand outlet (28); inside pipeline of pneumatic input devices (27), lightweight thermal insulation being paved, with peripheral waterproof protection and sealing materials.

31. A heat storage tank (2) as claimed in claim 28, **characterized in that**: the main body of the heat storage tank (2) is cylindrical, the taper (25) is a cone; in the circumference of the bottom of the storage heat tank (2), a ring wall (32) with a rectangle section is equipped with, from inside to outside there are also paved with a refractory layer, an insulation layer, and an outside wall sealed layer; collecting the flowing sand (5) flowed out from every channels, and exporting to some horizontal exits at bottom through transportation equipment such as air slot or conveying belt equipped in the ring channel.

32. The heat storage tank (2) as claimed in claim 29, **characterized in that**: the thermal insulation layer (20) is made of a nano-silica super thermal insulation material.

33. A method for increasing black color on the surface of a flowing sand for receiving sunlight directly by surface modification treatment with carbide, **characterized in that**: the sand and the carbon rich materials is mixed and heated to 600 °C or above under a condition of isolating air.

34. The method as claimed in claim 33, **characterized in that**: the carbon-rich material includes natural gas, coal gas, bitumen, oil, and/or flour.

35. A method for increasing black color on the surface of a flowing sand for receiving sunlight directly by surface modification treatment with carbide, **characterized in that**: the high temperature sand heated by sun tracking concentrating solar energy is mixed with pulverized coal in vacuums, keeping up to the surface black.

36. The method as claimed in claim 35, **characterized in that**: the mixing ratio between the sand and the pulverized coal is 100:1-10:1.

37. A heat exchanger device (3), **characterized in that**: a cyclone heat exchanger (8) is used, the main body of the cyclone heat exchanger is with a ring structure (31), on the outer edge of the ring (31), there are provided with uniform pores along the ring, in which same pipelines are inserted in 10°-20° uniform inclination angle α, while the other ends (34) of the pipelines (33) are inserted into a tube plate (35), and connected to a gas inlet through a tube box; a high-speed gas flowing through the entrance into the ring main body (31) of the cyclone heat exchanger (8), swirls and flows out upward in the center of it; a number of holes (36) in the upper middle of cyclone heat exchanger (8) are opened with axial symmetry, into which the flowing sand flows through the pipeline; within the cyclone heat exchanger (8), air swirls and flows inward along the radial direction, while the flowing sand swirls and flows outward under the action of centrifugal force; the gas and the flowing sand moves inversely along the radial direction, thus achieving counter current heat exchange between the gas and the flowing sand; and a collection mouth (37) is equipped with in the center of the bottom, to collect the flowing sand for output.

38. A heat exchanging device (3), **characterized in that**: a cyclone heat exchanger (8) is used, with an entrance section consisting of a volute-shaped air intake (100); the air entering into the cyclone heat exchanger (8) swirls in high speed, flowing out from an outtake (101) located on the upward center; the high temperature sand (5) enters into the cyclone heat exchanger (8) from uniformly distributed inlet pipes (102), in which on the one hand it rotates as swirls with air, on the other hand it flows outward along the radial direction under the action of centrifugal force, flowing out from an exit (103) beneath the cyclone; the gas and the flowing sand (5) move inversely along the radial direction, thus achieving counter current heat exchange between the gas and the flowing sand.

39. A heat exchanging device (3), **characterized in that**: swirling tubes(8) constituted by swirl tubes are used; passing the air guiding-plate (105), the high-speed gas enters into the swirl tube through the intake (104), making the helical motion, also moving along axial direction downward and along the radial direction inward, then flowing out from an outtake (107); circular pipelines (106) with trumpet-shaped openings at the lower end are equipped with in the upper central of the swirl tube; the lower end of the trumpet-shaped openings is equipped with the cone (109), with the circular cone tube slit; the sand (5) flows into the circular cone tube slit from the openings through the pipelines (106), entering into the main body of swirl tubes (8); then moving together with the air; simultaneously the flowing sands moves from inside to outside along the radial direction under the action of centrifugal force and the downward with wind, then flowing out from the ring-like exit (108); the gas and the flowing sand moves inversely along the radial direction, thus achieving counter current heat exchange between the gas and the flowing sand.

40. A sun tracking concentrating device (1), **characterized by**: wherein the sun -tracking concentrating device (1) including sun concentrating mirror (75), triangular bracket (71), the slewing bearing with gear (72), gear reducer controlling the horizontal direction control section (74), and gear reducer controlling the forward and backward direction and control section (81); the slewing bearing (72) is equipped with horizontally a in fixed triangular bracket (71); two coaxial ball bearings (73) are equipped with above the rotating disk of the slewing bearing (72), rotating with the rotation of the slewing bearing (72) in the horizontal direction;
the shaft of slewing bearing (72) and the shaft of ball bearing (73) of the shaft perpendicular with each other and intersect at a fixed point; sun concentrating mirror (75) are symmetrically fixed to the shafts of two ball bearing (73), the height of the sun concentrating mirror (75) on the two ball bearing (73) are fixed so that the center of gravity of sun concentrating mirror (75) overlaps with the fixed point.

41. According to claim 40, a sun tracking concentrating device (1), **characterized in that**: the sun concentrating mirror (75) is spliced by multi-block squared mirrors with same boundary in truss steel structure, with the central 1/20- 1/ 8 rectangular area vacant.

42. According to claim 40, wherein a sun tracking concentrating device (1), **characterized in that**: the output shaft of gear reducer controlling the forward and backward direction and control section (81) directly links to the rotating shaft ball bearing (73) through a coupling and a of.

43. according to claim 40, a sun tracking concentrating device (1), **characterized by**: wherein one end of the radius rod (76) with length less than the radius of the slewing bear (72) is fixed at the shaft of the ball bearing (73), with the other end hinge joint the self-locking screw (77); the free end screw (77) hinged to the rotating disc of the slewing bearing (72), the plane determined by the radius rod (76) and the screw (77) is perpendicular to the shaft of ball bearing (73), which rotate horizontally with the slewing bearing (72); by adjusting the position of the contact point the screw (77) on the rotating disc of the slewing bearing (72) with a motor, to adjust the length between the free end and the fixed end of the screw (77), to change the lever (76) in elevation, driving rotation of the shaft of ball bearing (73).

44. According to claim 40, a sun tracking concentrating device (1), **characterized by**: wherein gear (78) with diameter less than the radius of slewing bear (72) is mounted on the shaft of the ball bearing (73); in the output shaft of single head worm gear (79) through a coupling connected to the pinion gear to the drive gear (78); on the pitch circle of the worm gear (79) worm lead angle is less than 3.5°, so that the worm gear to achieve self-lock. Rotation of the input shaft of the worm gear (79) is driven by the controlling motor, then driving gear (78), so as to drive the shaft of ball bearing (73) rotation, to achieve controlling to the rotation of the elevation angle the sun concentrating mirror (75).

45. According to claim 40, a sun tracking concentrating device (1), **characterized by**: wheel (78) including 1/4 - 1/2 the circumference of the sector gear.

46. according to claim 40, a sun tracking concentrating device (1), **characterized by**: wherein dish solar concentrator is spliced by a set of the spherical mirror with the same focal length and the same squared boundary through the truss steel to form the spherical solar concentrator (75) with the same focal length and the rectangle outer boundary, ratio of the side length to the focal length 8/12; on the central axis with the length of 2/3 of the focal length to the mirror, the sun concentrating mirror (75) is set to a fixed spherical mirror (80).

47. According to claim 19, a sun tracking concentrating device (1), **characterized by**: for tower solar concentrator, its solar concentrator (75) by the square of the same size flat mirror by splicing with truss steel structure, overall for flat or curved glass.

48. A solar energy storage and the high temperature gas generating system as claimed in claim 2, **characterized in that**: a settling chamber heat exchanger (9) is used; wherein the lower part of the settling chamber (9) is a cylinder (40) or other shaped-tube (40), while the upper part is a cone-shaped structure (41); the internal of the cylinder is paved with lightweight thermal insulating refractory material while the external is covered by welded metal or brick; the bottom of the settling chamber (40) is paved with lightweight thermal insulation layers and ground layers; near the bottom of the cylinder, a layer with uniform ventilation holes is constituted by a heat resistant material (42), with 3'-15' inclination to partly cylinder-shaped exit (43); gas gets into from the external entrance to the higher end, made by high temperature resistant material (42), to the lower one of the settling chamber; the cone (41) angle of the tapered top cover is greater than the repose angle of sand; a cylinder container (44) is equipped with in the top center of the tapered cover, being the entrance of sand (5); a grid built by the cross rod (46) and vertical post (47) is equipped with at the bottom of the cone structure (41); on each lattice point, a funnel vessel (48) is equipped with to connect the top cylinder container (44) by pipelines (49); these pipelines (49), on the one hand causes the flowing sand (5) to flow in each funnel-shape vessel (48) from the top cylinder container (44), on the other hand, together with metal or nonmetallic grid (45), supports circular cone structure (41); the flowing sand (5) flows downward uniformly from each funnel-shape vessel (48), while the air flows upward uniformly, achieving counter current heat exchange between the air and flowing sand.

49. A heat exchanging device (3), **characterized in that**: a settling chamber heat exchanger (9) is used; the lower part of the settling chamber (9) is a cylinder (40) or the other shaped-tube (40), while the upper part is a cone-shaped structure (41); the internal of the cylinder is paved with lightweight thermal insulating refractory material, while the external is covered by welded metal or brick; the bottom of the settling chamber (40) is paved with lightweight thermal insulation layers and ground layers; near the bottom of the cylinder, a layer with uniform ventilation holes is constituted by a heat-resistant material (42), with 3°-15° inclination to partly cylinder-shaped exit (43); gas gets into from the external entrance to the higher end, made of a high temperature resistant material (42), to the lower one of the settling chamber; the cone (41) angle of the tapered top cover is greater than the repose angle of sand; a cylinder container (44) is equipped with in the top center of the tapered cover, being the entrance of sand (5); a grid built by the cross rod (46) and vertical post (47) is equipped with at the bottom of the cone structure (41); on each lattice point, a funnel vessel (48) is equipped with to connect the top cylinder container (44) by pipelines (49); these pipelines (49), on the one hand causes the flowing sand (5) to flow in each funnel-shape vessel (48) from the top cylinder container (44), on the other hand, together with metal or nonmetallic grid (45), plays a support role to circular cone structure (41); the flowing sand (5) flows downward uniformly from each funnel-shape vessel (48), while the air flows upward uniformly, achieving counter current heat exchange between the air and the flowing sand.

50. A solar energy storage and the high temperature gas generating system as claimed in claim 3, **characterized in that**: a sand-water heat exchanger (13) or steam generator (14) is used as the heat exchanging device (3), the basic structure is the steel pipelines (50) arranged vertically, parallelly, and uniformly in the lateral section; the upper orifices of the steel pipe (50) are welded to the tube plate (51), connected to steam drum (52); the lower orifices of steel pipelines (50) are welded to the tube plate (53), connected to a water tank (54); the whole steel pipelines (50) are covered by a periphery of cylinder (55); the upside of periphery of cylinder (55) connects the funnel (56) under the upper tube plate (51); the steam conduit (56) passes through the funnel; the downside of periphery of cylinder (55) connects inclined plate (57) above the lower tube plate (53); the outlet (58) is equipped with in the intersection parts of periphery of a cylinder (55) and an inclined plate (57); the flowing sand enters into an upper funnel (56), flowing to the inclined plate (57), passing through the slits among the steel pipelines (50) and the periphery of cylinder (55), flowing out from an outlet (58); the flowing capacity of sand is adjusted by the dimension of outlet (58); the high-temperature flowing sand (5) flows downward under the gravity force outside of the metallic pipeline (50); the flowing sand and the water realize heat exchange in the inverse flowing, the water in pipeline is heated to higher temperature or made to produce the steam.

51. The solar energy storage and the high temperature gas generating system as claimed in claim 50, **characterized in that**: the angle of the inclined plate (57) is 45°.

52. The solar energy storage and the high temperature gas generating system as claimed in claim 3, **characterized in that**: a flowing sand superheater (16) is used as the heat exchanging device (3), the flowing sand superheater (16) is juxtaposed by the multi-rows of snake-shaped steel pipelines (60); each row of snake-shaped steel pipelines (60) may consist of a sort of pipelines; each pipeline is bended repeatedly in terms of certain length; the exit and entrance of each row of snake-shaped steel pipelines (60) are welded to tube plates in the entrance (62) and the exit (63) of steam orifices, respectively; the pipelines (60) of superheater (16) were covered within the cube vessel (68); the upside of superheater(16) is in the inversion funnel shape, while the downside is of the erect funnel shape; the high-temperature flowing sand (5) flows in and exports out to the funnel-shaped exit; and the current capacity can be controlled by adjusting dimension of the exit.
